# EUROPEAN PATENT SPECIFICATION

(11) **EP 2 724 392 B1**
(45) Date of publication and mention of the grant of the patent: **06.04.2016**
(21) Application number: 12802765.3
(22) Date of filing: 25.06.2012
(51) Int. Cl.: H01M 2/08, H01M 2/06, C04B 41/51, H01M 10/0525

(54) **SEALING ASSEMBLY OF BATTERY, METHOD OF FABRICATING THE SAME AND LITHIUM BATTERY**
DICHTUNGSBAUGRUPPE FÜR EINE BATTERIE, HERSTELLUNGSVERFAHREN DAFÜR UND LITHIUMBATTERIE
ENSEMBLE ÉTANCHÉITÉ D'ACCUMULATEUR, PROCÉDÉ DE FABRICATION DE CET ENSEMBLE ET ACCUMULATEUR AU LITHIUM

(30) Priority: 23.06.2011 CN 201110169968
(43) Date of publication of application: 30.04.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: GONG, Qing, Shenzhen Guangdong 518118 (CN); LIN, Xinping, Shenzhen Guangdong 518118 (CN); ZHOU, Longfei, Shenzhen Guangdong 518118 (CN); ZHANG, Weifeng, Shenzhen Guangdong 518118 (CN)
(74) Representative: m patent group
(86) International application number: PCT/CN2012/077473
(87) International publication number: WO 2012/175056

(56) References cited:
- CN-A- 1 414 645
- CN-A- 101 593 819
- DE-A1- 3 300 880
- US-A- 4 563 214
- US-A- 5 525 374
- US-A1- 2009 011 331

## Description

### CROSS-REFERENCE TO RELATED APPLICATION

This application claims priority to and benefits of Chinese Patent Application Serial No. 201110169968.3, filed with the State Intellectual Property Office of P. R. China on June 23, 2011.

### FIELD

The present disclosure relates to the battery field, and more particularly to a sealing assembly of a battery, a method for fabricating the same and a lithium ion battery comprising the same.

### BACKGROUND

In a conventional lithium ion battery seal technology, a cover and a core column of a sealing assembly are sealed via a glass body.

However, after a long time of use and storage of the lithium ion battery, a lower layer of the glass body directly contacted with an electrolyte solution in the lithium ion battery may be corroded. For instance, a France company SAFT has made an anti-corrosion test on the glass body via an accelerating aging experiment that assembles a sealing assembly and a body of the lithium ion battery to form the lithium ion battery, and deposits the lithium ion battery under a temperature of about 150°C for seven days. The results indicate that a surface of the glass body is corroded, and gas tightness of the sealing assembly is reduced to less than 1.0×10⁻⁷m³·Pa/s. A main reason therefor lies in that a metal lithium may reduce silicon dioxide in the glass body and infiltrate into the glass body continuously, which may not only reduce the glass insulation property, but also cause a leakage of the lithium ion battery.

However, it should be further pointed that, currently, the core column used in the battery is generally Kovar alloy of 4J series. With a continuous increment of a battery capacity, a length and a diameter of the core column are increasing accordingly. The battery may be affected by a high resistivity of the alloy during work. However, when metal alloys, such as aluminum and copper, having low resistivity may be used, the melting points of these alloys are normally lower than the sealing temperature of the glass body. Thus, the sealing requirement may not be satisfied.

### SUMMARY

The present disclosure is aimed to solve at least one of the problems. Accordingly, a sealing assembly of a battery may need to be provided, which may have improved anti-corrosion property and enhanced sealing performance. Further, a method for fabricating a sealing assembly of a battery may also need to be provided. Still further, a lithium ion battery comprising the same may also need to be provided.

According to an embodiment of the present disclosure, a sealing assembly of a battery may be provided. The sealing assembly of a battery may comprise: a ceramic ring having a receiving hole; a metal ring fitted over the ceramic ring for sealing an open end of the battery; and a core column disposed in the receiving hole and containing a metal-ceramic composite.

According to another embodiment of the present disclosure, a method for fabricating a sealing assembly of a battery is provided. The method includes steps of: providing a ceramic ring having a receiving hole; filling a ceramic material into the receiving hole of the ceramic ring, and sintering the ceramic material to obtain a ceramic porous body; filling a metal material into the receiving hole of the ceramic ring above and/or under the sintered ceramic porous body, treating the metal material at a temperature above a melting point of the metal material to allow the melted metal material to infiltrate into the ceramic porous body, and obtaining a metal-ceramic composite after cooling; and welding a metal ring to the ceramic ring so as to fit the metal ring over the ceramic ring.

According to still another embodiment of the present disclosure, a lithium ion battery is provided. The lithium ion battery comprises: a shell having at least one open end; a sealing assembly sealing the open end of the shell to form a sealed space with the shell; and a pole core and an electrolyte solution disposed in the sealed space, in which the sealing assembly is the sealing assembly of a battery as disclosed hereinabove, the metal ring of the sealing assembly of a battery is connected with the shell, and the core column of the sealing assembly of a battery is connected with the pole core.

With the sealing assembly of a battery according to an embodiment of the present disclosure, by interposing the ceramic ring between the metal ring and the core column for connecting each other, a shell of a battery may be insulated from the core column, which may achieve excellent sealing therebetween. In addition, with the core column comprising a metal-ceramic composite, the connection between the ceramic porous body and the ceramic ring may be stably formed via sintering. And because the melted metal material is infiltrated into the ceramic porous body, the metal material and the ceramic porous body may closely combined with each other, thus a reliable sealing assembly with excellent sealing property may be achieved. Moreover, the ceramic ring has strong anti-corrosion and good insulation performances, which may effectively extend the lifetime of the lithium ion battery.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions taken in conjunction with the drawings in which:
Fig. 1 is a cross sectional view of a sealing assembly of a battery according to an embodiment of the present disclosure;
Fig. 2 is a cross sectional view of a sealing assembly of a battery according to another embodiment of the present disclosure;
Fig. 3 is a cross sectional view of a sealing assembly of a battery according to another embodiment of the present disclosure; and
Fig. 4 is a cross sectional view of a lithium ion battery according to an embodiment of the present disclosure.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. It is to be understood that, the embodiments described herein are merely used to generally understand the present disclosure, but shall not be construed to limit the present disclosure.

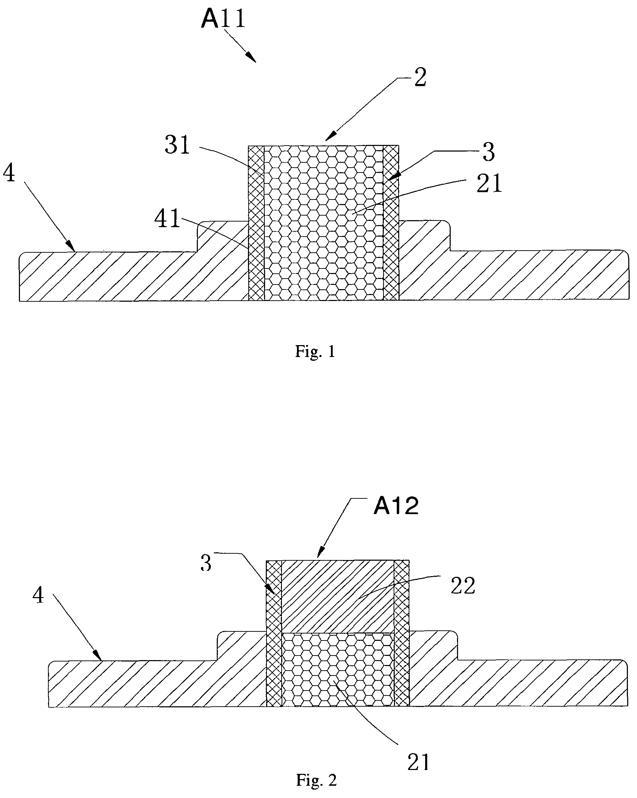

Furthermore, phrases or terms used herein with reference to device or element orientation, such as "lower", "upper" etc. are only used to describe relative positional relationships of elements in a sealing assembly and/or portions thereof shown in cross sectional views of the sealing assembly in Figs. 1-4, but shall not be construed to limit particular positional relationships of the elements and portions thereof referred in a lithium ion battery.

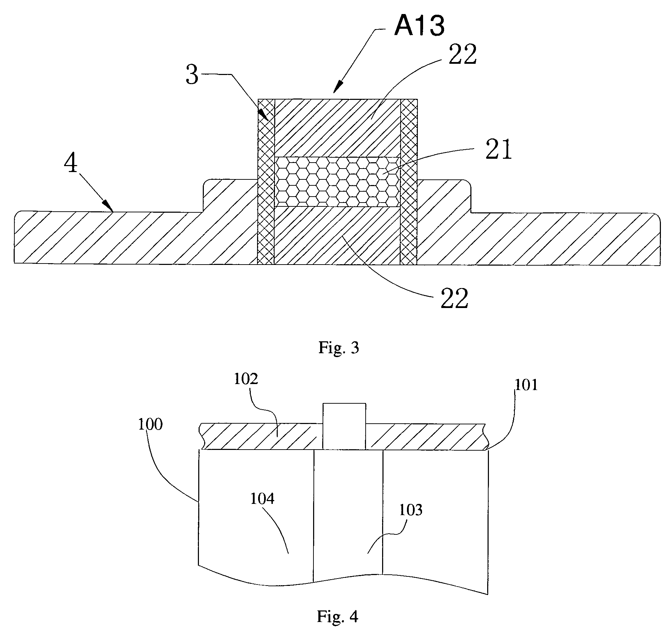

According to an embodiment of the present disclosure, a sealing assembly of a battery may be applied for sealing a battery, particularly a lithium ion battery, more particularly a high power lithium ion battery, such as a lithium ion power battery, a lithium ion energy storage battery etc. As shown in Fig. 4, a lithium ion battery mainly comprises: a shell 100 having at least an open end 101, a pole core 103 disposed in the shell, and an electrolyte solution 104 received in the shell 100. The open end 101 of the shell 100 is sealed via the sealing assembly 102 to prevent the electrolyte solution 104 from leaking. The shell 100 is generally made of aluminum or steel for disposing the pole core 103 and receiving the electrolyte solution 104. The pole core 103 is formed by sequentially stacking or rolling a positive pole sheet, a diaphragm and a negative pole sheet. For clarity purpose, the detailed description of the pole core 103 is hereby omitted, which may be known in the art.

In the following, the sealing assembly 102 will be described in detail. Fig. 1 is a cross sectional view of the sealing assembly 102. As shown in Fig. 1, the sealing assembly 102 comprises: a ceramic ring 3, a metal ring 4 and a core column 2. The metal ring 4 is fitted over the ceramic ring 3, which may be used for sealing the open end 101 of the battery. The ceramic ring 3 has a receiving hole 31 formed at the center part thereof. The core column 2 is formed in the receiving hole 31 and comprises a metal-ceramic composite 21.

Specifically, the metal ring 4 is an aluminum ring or an aluminum alloy ring and is welded to the shell 100 of the lithium ion battery so as to allow the sealing assembly 102 to seal the open end 101 of the shell 100. For instance, the metal ring 4, which is made of a steel plate, is used for connecting with the shell 100 of the lithium ion battery generally via welding to realize an enclosed connection between the whole sealing assembly 102 and shell 100. A mounting hole 41 is formed in a center of the metal ring 4 for accommodating the ceramic ring 3. A diameter of the mounting hole 41 equals with an outer diameter of the ceramic ring 3. It should be noted that, because the core column 2 is configured as one pole of the battery, and the shell 100 which is connected with the metal ring 4 is usually configured as the opposite pole of the battery, it is necessary for the core column 2 to be insulated from the metal ring 4. By interposing the ceramic ring 3 between the core column 2 and the metal ring 4, the core column 2 and the metal ring 4 are connected with each other whereas insulated from each other.

The ceramic ring 3 is selected from any of a group consisting of: an alumina ceramic ring, a zirconia ceramic ring, an aluminum nitride ceramic ring, a boron nitride ceramic ring, a silicon nitride ceramic ring, a ceramic ring of a compound of alumina and zirconia. In one embodiment, the alumina ceramic ring and the ceramic ring of alumina and zirconia may be adopted for forming excellent bonding with a metal body of copper. The ceramic ring 3 may possess a strong anti-corrosion property to avoid corrosion by the electrolyte solution 104, thus extending the lifetime of the lithium ion battery. Moreover, the ceramic ring 3 may have a better anti-impact strength and a thermal shock resistance than those of a body made of glass, which may achieve the sealing assembly 102 with a more stable and safe structure. Compared with a ceramic plate, the ceramic ring 3, as a sealing medium, is thicker with stronger thermal shock resistance and thermal cycling performance. In the embodiment, because the receiving hole 31 may receive the core column 2, it is necessary for the ceramic ring 3 to have a predetermined thickness. In one embodiment, the thickness of the ceramic ring 3 is 6.5±3mm, the outer diameter of the ceramic ring 3 is 20±1mm, and a diameter of the receiving hole 31 is 10±0.5mm.

A main improvement of the present disclosure lies in that, the core column 2 comprises the metal-ceramic composite 21. In an embodiment, the metal-ceramic composite 21 comprises a ceramic porous body and a metal material filled in pores of the ceramic porous body. A ceramic composite structure is formed by the ceramic porous body and the ceramic ring 3. If the sealing assembly 102 is configured as one for a positive pole of a battery, the metal material may be aluminum or aluminum alloy. In one embodiment, a magnesium-aluminum alloy may be adopted. If the sealing assembly 102 is configured as one for a negative pole of a battery, the metal material may be copper or copper alloy. In one embodiment, a mixture of copper and a copper oxide, i.e. copper oxide or cuprous oxide, may be adopted. The metal-ceramic composite 21 has a good electrical conductivity to form a good electrical connection with the pole core 103 of a lithium ion battery. Moreover, because the ceramic porous body and the ceramic ring 3 may form an integrated structure, the metal material is melted and filled into the ceramic porous body, the manufacturing process of which will be described in detail hereinafter, , a good wetting between the metal material and the ceramic porous body may be achieved, and a good connection between the whole metal-ceramic composite 21 and the ceramic ring 3 may be obtained accordingly. Therefore, it enhances the reliability of the entire sealing assembly 102 with improved sealing effect.

Figs. 2 and 3 are cross sectional views of the sealing assembly 102 of a battery according to some embodiments of the present disclosure. As shown in Fig. 2 and Fig. 3, the core column 2 further comprises a metal part 22. The metal part 22 is disposed at an upper end of the metal-ceramic composite 21, which is also received in the ceramic ring 3, as shown in Fig. 2. In one embodiment, the metal part 22 is disposed at both the upper end and a lower end of the metal-ceramic composite 21 which are received in the ceramic ring 3, as shown in Fig. 3. The metal part 22 is formed by the metal material, the manufacturing process of which will be described in detail hereinafter. If the sealing assembly 102 is configured as one for a positive pole of a battery, the metal material may be aluminum or aluminum alloy. If the sealing assembly 102 is configured as a one for a negative pole of a battery, the metal material may be copper or copper alloy. The core columns 2 shown in Fig. 2 and Fig. 3 comprise the metal-ceramic composite 21 and the metal part 22. The metal-ceramic composite 21 comprises the ceramic porous body and the metal material filled in the pores of the ceramic porous body. The ceramic porous body and the ceramic ring 3 may form into an integral structure. A portion of a melted metal material, which is infiltrated into the ceramic porous body, and the ceramic porous body form the metal-ceramic composite 21 after cooling, while a portion of the melted metal material, which is not infiltrated into the ceramic porous body, forms the metal part 22 after cooling. The core column 2 having either of above two structures may form a good electrical connection with the pole core 103 of a lithium ion battery whereas maintain an integral connection with the ceramic ring 3. Therefore, the entire sealing assembly 102 is more reliable with improved sealing effect.

A method for fabricating the sealing assembly 102 according to an embodiment of the present disclosure is provided. The method comprises following steps.

Firstly, a ceramic ring 3 having a receiving hole 31 is provided (Step 1). The ceramic ring 3 may be formed by any process known in the art. In one embodiment, ceramic powder may be compressed into the ceramic ring 3 by dry-pressing. The material of the ceramic powder may be chosen from any one of alumina, zirconia, aluminum nitride, boron nitride, silicon nitride or a combination thereof. The receiving hole 31 is formed in a central part of the ceramic ring 3 after forming the ceramic ring 3.

Then, ceramic material is filled into the receiving hole 31 of the ceramic ring 3, and a ceramic porous body is obtained via sintering (Step 2). The ceramic material comprises ceramic powder which is directly filled into the receiving hole 31 of the ceramic ring 3 or made into a slurry and then filled into the receiving hole 31 of the ceramic ring 3. In one embodiment, the ceramic powder is made into the slurry and then filled into the receiving hole 31 of the ceramic ring 3. The ceramic powder may be same with that of the ceramic ring 3, that is, the ceramic powder may be chosen from any of alumina, zirconia, aluminum nitride, boron nitride, silicon nitride or a combination thereof. The ceramic powder and a solvent are made into the slurry, in which a weight percent of the ceramic powder may be 50-70wt%, and the solvent may be a conventional solvent adapted for the ceramic powder, such as paraffin etc. In one embodiment, the ceramic powder may comprise ceramic powders with different particle diameters, for instance, it may comprise a ceramic powder of particle diameter ranging from 12µm to 18µm and a ceramic powder of particle diameter ranging from 2µm to 5µm, and a weight ratio of the ceramic powders of the two particle diameters is 3-2:1. The slurry made by ceramic powders with different particle diameters may be dispersed more uniformly. In addition, it should be noted that the sintering is performed at a sintering temperature of 1650±50°C for 2±1 hours. In one embodiment, firstly a binder removal may be performed to the ceramic material for removing the solvent at a temperature of 550±50°C for 12-24 hours, and then the sintering may follow. Preferably, the ceramic ring 3 and the ceramic material filled into the ceramic ring 3 are simultaneously sintered to form an integrated structure of the ceramic composite structure.

The metal material is filled into the receiving hole 31 of the ceramic ring 3 above and/or under the sintered ceramic porous body, the metal material is treated at a temperature above a melting point of the metal material to allow the melted metal material to infiltrate into the ceramic porous body, and a metal-ceramic composite is obtained after cooling (Step 3). In this step, the metal material is heated at the temperature above the melting point of the metal material so that the melted metal material is infiltrated into the ceramic porous body by capillary effect, that is, when the melted metal material connects with the ceramic porous body having pores, if a wetting occurs, the melted metal material may infiltrate into the ceramic porous body via the pores. It should be illustrated that, in one embodiment, the melted metal material may be entirely infiltrated into the ceramic porous body to form the metal-ceramic composite. And in another embodiment, a first portion of the melted metal material may be infiltrated into the ceramic porous body while a second portion of the melted metal material may not be infiltrated into the ceramic porous body, thus the first portion of the melted metal material and the ceramic porous body form the metal-ceramic composite, and the second portion of the melted metal material forms a metal part 22 disposed at an upper end and/or a lower end of the metal-ceramic composite. As shown in Fig. 1, the ceramic porous body is formed in the whole receiving hole 31 of the ceramic ring 3, and the melted metal material is entirely infiltrated into the ceramic porous body to form the metal-ceramic composite after cooling. As shown in Fig. 2, the ceramic porous body is formed at a lower end of the receiving hole 31 of the ceramic ring 3, while the first portion of the melted metal material infiltrated into the ceramic porous body and the ceramic porous body form the metal-ceramic composite after cooling, and the second portion of the melted metal material not infiltrated into the ceramic porous body forms the metal part 22 disposed at the upper end of the metal-ceramic composite after cooling. As shown in Fig. 3, the ceramic porous body is formed at a lower end of the receiving hole 31 of the ceramic ring 3, while the first portion of the melted metal material infiltrated into the ceramic porous body and the ceramic porous body form the metal-ceramic composite after cooling, and the second portion of the melted metal material not infiltrated into the ceramic porous body forms the metal part 22 disposed at the upper end and the lower end of the metal-ceramic composite after cooling. The term "not infiltrated" used herein refers to a portion of the metal material not entered into the ceramic porous body, and also refers to a portion first entered into and then effused out of the ceramic porous body. In step 2, the ceramic ring 3 and the ceramic material filled into the ceramic ring 3 are sintered to form the integrated structure of the ceramic composite structure. In this step, by melting the metal material to obtain the melted metal material and then infiltrating the melted metal material into the ceramic porous body to form the metal-ceramic composite 21 after cooling, a good combination between the metal material and the ceramic porous body are formed. In one embodiment, if the sealing assembly 102 is configured as one for a positive pole of a battery, the metal material may be aluminum or aluminum alloy, and may be treated at a temperature above a melting point of aluminum or aluminum alloy for 1-3 hours. In one embodiment, the metal material may be magnesium aluminum alloy because that a melted magnesium aluminum alloy may effectively realize a pressureless infiltration into the ceramic porous body. The pressureless infiltration of magnesium aluminum alloy may be performed under a temperature of 950°C to 1050°C and for a time 1 hour to 3 hours. In another embodiment, if the sealing assembly 102 is configured as one for a negative pole of a battery, the metal material may be a mixture of copper and copper oxides, i.e. copper oxide or cuprous oxide. Only copper or copper alloy cannot wet the ceramic porous body, thus neither realizing the pressureless infiltration into the ceramic porous body, nor realizing an interface joint with an inner wall of the ceramic ring 3. The pressureless infiltration of the mixture of copper and copper oxides may be treated at a temperature of 1250°C to 1300°C for 1 hour to 3 hours. The melted metal material may be infiltrated into the ceramic porous body by capillary effect to form the metal-ceramic composite 21 and wet the inner wall of the ceramic ring 3 via liquid phase. Consequently, the firm interface joint between the metal-ceramic composite 21 and the ceramic ring 3 may be formed after cooling, which allows a tight sealing among the ceramic ring 3, the ceramic porous body and the metal material.

Finally, the metal ring 4 is welded to the ceramic ring 3 so that the metal ring 4 is fitted over the ceramic ring 3 (Step 4). In an embodiment, the metal ring 4 may be fitted over the ceramic ring 3 via soldering or a fusion casting. During soldering, the welding between metal and ceramic may be realized by using a soldering flux at a temperature under the melting point of a metal base material. During the fusion casting, the welding between metal and ceramic may be realized merely by melting the metal base material. For clarity purpose, the steps and parameters of the fusion casting will not be described in detail, which may be easily implemented or obtained in the art. In one embodiment where the soldering process is adopted, aluminum silicon (Al-Si) alloy, aluminum magnesium (Al-Mg) alloy or aluminum silicon magnesium (Al-Si-Mg) alloy may be used as a soldering material for welding ceramic and aluminum. In one embodiment, to enhance the welding effect, the aluminum silicon (Al-Si) alloy may be used, in which the Si content may be within a range from 0 to 12wt%, and the balance is aluminum, and the soldering may be performed at a temperature of about 570°C to about 660°C for about 5 minutes to about 30 minutes under an atmosphere of vacuum or inert gas. After the soldering, a soldering flux layer may be formed between the metal ring 4 and the ceramic ring 3, so that the metal ring 4 and the ceramic ring 3 may be connected via the soldering flux layer.

From above, by interposing the ceramic ring 3 between the metal ring 4 and the core column 2 for connecting each other, the shell 100 and the core column 2 may be insulated from each other, thus a sealed space may be obtained accordingly. The core column 2 is configured as an electrode of the battery for electrically connecting with the pole core 103 of the battery. Due to the melted metal material being infiltrated into the ceramic porous body, the metal material and the ceramic porous body may closely combined with each other, thus a reliable sealing assembly with excellent sealing property may be achieved. Moreover, the ceramic ring 3 has strong anti-corrosion and good insulation performances, which may effectively extend a lifetime of the lithium ion battery.

In one embodiment, the shell 100 of the lithium ion battery is configured as a positive pole, and the core column 2 of the sealing assembly 102 is configured as a negative pole when assembling a lithium ion battery. In this embodiment, the sealing assembly 102 is configured as the one for a negative pole of the battery and the shell 100 has one open end. The pole core 103 is provided in the shell 100, the electrolyte solution 104 is injected into the shell 100. Alternatively, the electrolyte solution 104 may also be injected via an injecting hole (not shown) in the metal ring 2. Then, the sealing assembly 102 may be mounted at the open end 101 of the shell 100. During the above process, the metal ring 4 of the sealing assembly 102 and the shell 100 are welted together, and the core column 2 of the sealing assembly 102 and the pole core 103 are connected. To be specific, the positive tab of the pole core 103 is connected with the shell 100, and the negative tab of the pole core 103 is connected with the core column 2. A sealed space is formed between the sealing assembly 102 and the shell 100 after assembly. The pole core 103 and the electrolyte solution 104 are received in the sealed space. The shell 100 and the core column 2 are configured as two poles of the lithium ion battery respectively to be connected with power-consuming devices.

In the following, examples embodying the gist or essence of the present disclosure will be described in detail for the better understanding of the present disclosure. However, it should be noted that the following examples are presented for illustration purpose only rather than limitation.

### Example 1

In the following, a method for fabricating the sealing assembly will be described hereinafter with reference to Fig. 1.

Firstly, the ceramic ring 3 is formed. An alumina ceramic powder with an alumina content of 95wt% and a balance of 5wt% sintering aid phase, such as a glass having a composition of CaO-MgO-Al₂O₃-B₂O₃, is compressed into the ceramic ring 3 by dry-pressing. The receiving hole 31 is formed in the center part of the ceramic ring 3.

Then, the ceramic porous body is formed accordingly. Two alumina ceramic powders with particle diameters of 12µm and 2µm are mixed with each other having a weight ratio of 3:1, then paraffin is added to form a slurry which has an alumina ceramic powders of 65wt%. And the slurry is then filled into the receiving hole 31 of the ceramic ring 3. And the ceramic ring 3 with the slurry being filled therein is put into a sintering oven with the temperature being increased up to 600°C with a heating rate of 5°C/min and removing the binder for 2 hours, and then the temperature is increased up to 1650°C with a heating rate of 5°C/min, and the ceramic porous body desired is obtained after sintering for 2 hours. The ceramic porous body is formed in the entire receiving hole of the ceramic ring 3.

Then, metal-ceramic composite 21 is formed accordingly. To be specific, a mixture of Cu and Cu₂O with a weight ratio of 3.5:1 is filled into the receiving hole 31 of the sintered ceramic ring 3 above the sintered ceramic porous body, and treated under inert gas at a temperature of about 1250°C for 2 hours to allow the mixture of Cu and Cu₂O to be entirely infiltrated into the ceramic porous body, thus obtaining a tight seal with the inner wall of the ceramic ring 3.

Lastly, the metal ring 4 is mounted. To be specific, in this step, aluminum silicon alloy is used as the soldering flux. The metal ring 4 is fitted over the ceramic ring 3 under the vacuum at a temperature of about 600°C. Thus, the sealing assembly A11 of the negative pole of a battery shown in Fig. 1 is obtained.

### Example 2

In the following, a method for fabricating the sealing assembly will be described hereinafter with reference to Fig. 2. And in this example, the sealing assembly is used for the positive pole of a battery.

Firstly, the ceramic ring 3 is formed. With the receiving hole 31 being formed at the central part thereof.

Then, the ceramic porous body is formed. Two alumina ceramic powders with particle diameters of 12µm and 3µm are mixed with each other having a weight ratio of 3:1, then paraffin is added to form a slurry, which has an alumina ceramic powders of 65wt%. Then the slurry is filled into the receiving hole 31 of the ceramic ring 3. And the ceramic ring 3 and the slurry being filled therein is put into a sintering oven with the temperature being increased to 600°C with a heating rate of 5°C/min and removing the binder for 2 hours, and then the temperature is increased up to 1700°C with a heating rate of 5°C/min, and the ceramic porous body desired is obtained after sintering for 3 hours. The ceramic porous body is formed at the lower end of the receiving hole 31 of the ceramic ring 3.

Then, the metal-ceramic composite 21 is formed accordingly. To be specific, magnesium aluminum alloy is filled into the receiving hole 31 of the sintered ceramic ring 3 above the sintered ceramic porous body, and treated under inert gas at a temperature of about 1000°C for 3 hours. The portion of the melted magnesium aluminum alloy infiltrated into the ceramic porous body forms the metal-ceramic composite 21, and the portion of the melted magnesium aluminum alloy not infiltrated into the ceramic porous body forms the metal part 22 disposed at the upper end of the metal-ceramic composite 21 after cooling.

Lastly, the metal ring 4 is mounted. To be specific, in this step, aluminum silicon alloy is used as the soldering flux. The metal ring 4 is fitted over the ceramic ring 3 under the vacuum atmosphere at a temperature of about 600°C. Thus, the sealing assembly A12 of the positive pole of a battery shown in Fig. 2 is obtained.

### Example 3

In the following, a method for fabricating the sealing assembly will be described hereinafter with reference to Fig. 3. In this example, the sealing assembly is used for the negative pole of a battery.

Firstly, the ceramic ring 3 is formed. An alumina ceramic powder with an alumina content of 95wt% is compressed into the ceramic ring 3 by dry-pressing. The receiving hole 31 is formed at the central part of the ceramic ring 3.

Then, the ceramic porous body is formed. Two alumina ceramic powders with particle diameters of 11µm and 5µm are mixed with each other having a weight ratio of 3:1, then paraffin is added to form a slurry, which an alumina ceramic powders of 65wt%. Then the slurry is filled into the receiving hole 31 of the ceramic ring 3. And the ceramic ring 3 and the slurry being filled in the ceramic ring 3 are put into a sintering oven with the temperature being increased to 600°C with a heating rate of 5°C/min and removing binder for 2 hours, and then the temperature is increased up to 1650°C with a heating rate of 5°C/min, and the ceramic porous body desired is obtained after sintering for 2 hours. The ceramic porous body is formed at a middle portion of the receiving hole 31 of the ceramic ring 3.

Then, the metal-ceramic composite 21 is formed. To be specific, a mixture of Cu and Cu₂O with a weight ratio of 2.5:1 is filled into the receiving hole 31 of the sintered ceramic ring 3 above the sintered ceramic porous body, and treated under inert gas at a temperature of about 1300°C for 4 hours. The portion of the melted mixture of Cu and Cu₂O infiltrated into the ceramic porous body forms the metal-ceramic composite, and the portion of the melted mixture of Cu and Cu₂O not infiltrated into the ceramic porous body and the portion of the melted mixture of Cu and Cu₂O first infiltrated into and then effused out of the ceramic porous body form the metal part 22 provided at the upper end and the lower end of the metal-ceramic composite 21 after cooling.

Lastly, the metal ring 4 is mounted. To be specific, in this step, aluminum silicon alloy is adopted as the soldering flux. The metal ring 4 is fitted over the ceramic ring 3 under the vacuum atmosphere at a temperature of about 600°C. Thus, the sealing assembly A13 of the negative pole of a battery shown in Fig. 3 is obtained.

### Comparative Example 1

A fabrication of a prior sealing assembly of a battery will be described as follows.

According to a sealing method by a glass body disclosed by a Chinese Patent CN201397827, by sealing a cover plate of a battery box and an electrode core made of aluminum and copper via the glass body, a sealing assembly D1 for the positive pole of a battery and a sealing assembly D2 for the negative pole of a battery are obtained.

### Comparative Example 2

The manufacture of a prior sealing assembly of a battery will be described as follows.

By welding a ceramic ring and a core column made of aluminum and copper via ceramic sealing, a sealing assembly D3 of the positive pole of a battery and a sealing assembly D4 of the negative pole of a battery are obtained.

### Performance test

### 1. Gas tightness test

The sealing assemblies A11, A 12 and A 13 as provided in the examples 1-3 and the sealing assemblies D1, D2, D3 and D4 as provided by the comparative examples 1-2 are disposed in a sealed clip cavity. Connecting parts of these seal assemblies under test are exposed out of the sealed clip cavity. The sealed clip cavity is charged with a gas having a pressure of 0.6 MPa for 3 minutes with the water being dropped at the connecting parts. If bubbles are generated at the connecting parts, it is determined that there is gas leakage, otherwise the gas tightness of the sealing assembly is qualified. The test result is shown in Table 1.

**Table 1**

| sealing assembly | result |
|---|---|
| A11 | no bubble appearing at the connecting part |
| A12 | no bubble appearing at the connecting part |
| A13 | no bubble appearing at the connecting part |
| D1 | bubble appearing at the connecting part, the gas tightness test failed |
| D2 | bubble appearing at the connecting part, the gas tightness test failed |
| D3 | no bubble appearing at the connecting part |
| D4 | no bubble appearing at the connecting part |

### 2. Thermal shock test

The seal assemblies A11, A12 and A13 as provided in the examples 1-3 and the seal assemblies D3 and D4 as provided in the comparative example 2 are disposed in cold water at about 0°C for 3 minutes, and then immediately moved into a boiled water with a temperature at about 100°C for 3 minutes. Such process may be repeated for a plurality of times before which the gas tightness test of the sealing assembly is maintained. The test result is shown in Table 2.

**Table 2**

| sealing assembly | result |
|---|---|
| A11 | after 200 times of thermal shock tests, the gas tightness test still remains |
| A12 | after 200 times of thermal shock tests, the gas tightness test still remains |
| A13 | after 200 times of thermal shock tests, the gas tightness test still remains |
| D3 | after 10 times of thermal shock tests, the gas tightness test fails |
| D4 | after 10 times of thermal shock tests, the gas tightness test fails |

It can be seen from Table 1 and Table 2 that the seal assemblies A11, A12 and A13 as provided in the examples 1-3 of the present disclosure still pass the gas tightness test after 200 times of thermal shock tests. The seal assemblies D1 and D2 as provided in the comparative example 1 fail to pass the gas tightness test. Although the seal assemblies D3 and D4 as provided in the comparative example 2 pass the gas tightness test, they fail to pass the gas tightness test after 10 times of thermal shock test. The result may obviously indicate that the seal assemblies as provided in the present disclosure have more reliable connections and better sealing effect.

Although explanatory embodiments have been shown and described, it would be appreciated by those skilled in the art that changes, alternatives, and modifications may be made in the embodiments without departing from principles of the disclosure. Such changes, alternatives, and modifications all fall into the scope of the claims.

## Claims

1. A sealing assembly of a battery, comprising:
a ceramic ring having a receiving hole;
a metal ring fitted over the ceramic ring for sealing an open end of the battery; and
a core column disposed in the receiving hole and comprising a metal-ceramic composite.

2. The sealing assembly of a battery according to claim 1, wherein the metal-ceramic composite comprises:
a ceramic porous body; and
a metal material filled in pores of the ceramic porous body,
wherein the metal-ceramic composite and the ceramic ring are formed into a ceramic composite structure.

3. The sealing assembly of a battery according to claim 2, wherein the core column further comprises:
a metal part disposed at an upper end and/or a lower end thereof.

4. The sealing assembly of a battery according to claim 3, wherein the sealing assembly is used for a positive pole of the battery, and the metal material and the metal part are both made of magnesium aluminum alloy.

5. The sealing assembly of a battery according to claim 3, wherein the sealing assembly is used for a negative pole of the battery, and the metal material and the metal part are both made of a mixture of copper and a copper oxide.

6. The sealing assembly of a battery according to claim 1, wherein the ceramic ring is selected from any of a group consisting of: an alumina ceramic ring, a zirconia ceramic ring, an aluminum nitride ceramic ring, a boron nitride ceramic ring, a silicon nitride ceramic ring, and a ceramic ring of alumina and zirconia, and the metal ring is selected from any of a group consisting of: an aluminum ring and an aluminum alloy ring, and the metal ring has a mounting hole therein.

7. A method for fabricating a sealing assembly of a battery, comprising:
providing a ceramic ring having a receiving hole;
filling a ceramic material into the receiving hole of the ceramic ring, and sintering the ceramic material to obtain a ceramic porous body;
filling a metal material into the receiving hole of the ceramic ring above and/or under the sintered ceramic porous body, treating the metal material at a temperature of above a melting point of the metal material to allow the melted metal material to infiltrate into the ceramic porous body, and obtaining a metal-ceramic composite after cooling; and
welding a metal ring onto the ceramic ring so as to fit the metal ring over the ceramic ring.

8. The method according to claim 7, wherein in the step of filling, the ceramic porous body and a portion of the melted metal material infiltrated into the ceramic porous body form the metal-ceramic composite after cooling, while the remaining portion of the melted metal material not infiltrated into the ceramic porous body forms a metal part after cooling.

9. The method according to claim 7, wherein the sintering is performed by sintering the ceramic ring and the ceramic material filled into the ceramic ring simultaneously to form a ceramic composite structure.

10. The method according to claim 7 or 9, wherein the sintering is performed at a sintering temperature of 1650±50°C for a sintering time of 2±1hours.

11. The method according to claim 7, wherein the ceramic material comprises a ceramic powder filled into the receiving hole of the ceramic ring directly or in a slurry form.

12. The method according to claim 7, wherein in the step of welding, the metal ring is fitted over the ceramic ring via soldering, and the soldering is performed under a soldering temperature of 570°C to 660°C for 5 minutes to 30 minutes under an atmosphere of vacuum or an inert gas using an aluminum-silicon alloy as a soldering material, in the aluminum-silicon alloy the silicon content is within a range from 0 to 12wt% and the balance is aluminum.

13. The method according to claim 7, wherein the sealing assembly is used for a positive pole of the battery, and the metal material and the metal part are both made of a magnesium-aluminum alloy.

14. The method according to claim 7, wherein the sealing assembly is used for a negative pole of the battery, and the metal material and the metal part are made of a mixture of copper and a copper oxide.

15. A lithium ion battery, comprising:
a shell having at least an open end;
a sealing assembly according to any of claims 1-6 for sealing the open end to form a sealed space with the shell; and
a pole core and an electrolyte solution received in the sealed space,
wherein the metal ring of the sealing assembly is connected with the shell, and the core column of the sealing assembly is connected with the pole core.

## Patentansprüche

1. Dichtungsanordnung einer Batterie, die enthält:
einen Keramikring mit einem Aufnahmeloch;
einen Metallring, der über dem Keramikring angebracht ist, um ein offenes Ende der Batterie abzudichten; und
eine Kernsäule, die in dem Aufnahmeloch angeordnet ist und einen Metall-Keramik-Verbundwerkstoff enthält.

2. Dichtungsanordnung einer Batterie nach Anspruch 1, wobei der Metall-Keramik-Verbundwerkstoff enthält:
einen porösen Keramikkörper; und
ein Metallmaterial, das in die Poren des porösen Keramikkörpers gefüllt ist,
wobei der Metall-Keramik-Verbundwerkstoff und der Keramikring zu einer Keramik-Verbundwerkstoffstruktur ausgebildet sind.

3. Dichtungsanordnung einer Batterie nach Anspruch 2, wobei die Kernsäule ferner enthält:
einen Metallabschnitt, der an einem oberen Ende und/oder einem unteren Ende hiervon angeordnet ist.

4. Dichtungsanordnung einer Batterie nach Anspruch 3, wobei die Dichtungsanordnung für einen positiven Pol der Batterie verwendet wird und das Metallmaterial und der Metallabschnitt jeweils aus einer Magnesium-Aluminium-Legierung hergestellt sind.

5. Dichtungsanordnung einer Batterie nach Anspruch 3, wobei die Dichtungsanordnung für einen negativen Pol der Batterie verwendet wird und das Metallmaterial und der Metallabschnitt jeweils aus einem Gemisch aus Kupfer und Kupferoxid hergestellt sind.

6. Dichtungsanordnung einer Batterie nach Anspruch 1, wobei der Keramikring aus einer Gruppe gewählt ist, die besteht aus: einem Aluminiumoxid-Keramikring, einem Zirkonoxid-Keramikring, einem Aluminiumnitrid-Keramikring, einem Bornitrid-Keramikring, einem Siliziumnitrid-Keramikring und einem Keramikring aus Aluminiumoxid und Zirkonoxid, und der Metallring aus einer Gruppe gewählt ist, die besteht aus: einem Aluminiumring und einem Aluminiumlegierungsring, wobei in dem Metallring ein Montageloch vorhanden ist.

7. Verfahren zum Herstellen einer Dichtungsanordnung einer Batterie, das umfasst:
Bereitstellen eines Keramikrings, der ein Aufnahmeloch besitzt;
Füllen eines Keramikmaterials in das Aufnahmeloch des Keramikrings und Sintern des Keramikmaterials, um einen porösen Keramikkörper zu erhalten;
Füllen eines Metallmaterials in das Aufnahmeloch des Keramikrings oberhalb und/oder unterhalb des gesinterten porösen Keramikkörpers, Behandeln des Metallmaterials bei einer Temperatur oberhalb eines Schmelzpunkts des Metallmaterials, um dem geschmolzenen Metallmaterial zu ermöglichen, in den porösen Keramikkörper einzudringen, und Erhalten eines Metall-Keramik-Verbundwerkstoffs nach dem Abkühlen; und
Schweißen eines Metallrings auf den Keramikring, um den Metallring an dem Keramikring anzubringen.

8. Verfahren nach Anspruch 7, wobei in dem Füllschritt der poröse Keramikkörper und ein Anteil des geschmolzenen Metallmaterials, der in den porösen Keramikkörper eingedrungen ist, nach dem Abkühlen den Metall-KeramikVerbundwerkstoff bilden, während der verbleibende Anteil des geschmolzenen Metallmaterials, der nicht in den porösen Keramikkörper eingedrungen ist, nach dem Abkühlen einen Metallabschnitt bildet.

9. Verfahren nach Anspruch 7, wobei das Sintern durch gleichzeitiges Sintern des Keramikrings und des in den Keramikring gefüllten Keramikmaterials ausgeführt wird, um eine Keramik-Verbundwerkstoffstruktur zu bilden.

10. Verfahren nach Anspruch 7 oder 9, wobei das Sintern bei einer Sintertemperatur von 1650 ± 50 °C während einer Sinterzeit von 2 ± 1 Stunden ausgeführt wird.

11. Verfahren nach Anspruch 7, wobei das Keramikmaterial ein Keramikpulver enthält, das direkt oder in Form von Schlamm in das Aufnahmeloch des Keramikrings gefüllt wird.

12. Verfahren nach Anspruch 7, wobei in dem Schweißschritt der Metallring über dem Keramikring durch Löten angebracht wird und das Löten bei einer Löttemperatur im Bereich von 570 °C bis 660 °C während 5 Minuten bis 30 Minuten in einer Unterdruckatmosphäre oder einer Edelgasatmosphäre unter Verwendung einer Aluminium-Silizium-Legierung als Lötmaterial ausgeführt wird, wobei in der Aluminium-Silizium-Legierung der Siliziumgehalt in einem Bereich von 0 bis 12 Gew.-% liegt und der Rest Aluminium ist.

13. Verfahren nach Anspruch 7, wobei die Dichtungsanordnung für einen positiven Pol der Batterie verwendet wird und das Metallmaterial und der Metallabschnitt jeweils aus einer Magnesium-Aluminium-Legierung hergestellt sind.

14. Verfahren nach Anspruch 7, wobei die Dichtungsanordnung für einen negativen Pol der Batterie verwendet wird und das Metallmaterial und der Metallabschnitt jeweils aus einem Gemisch aus Kupfer und Kupferoxid hergestellt sind.

15. Lithiumionenbatterie, die enthält:
eine Ummantelung, die wenigstens ein offenes Ende besitzt;
eine Dichtungsanordnung nach einem der Ansprüche 1-6, um das offene Ende abzudichten, um mit der Ummantelung einen abgedichteten Raum zu bilden; und
einen Polkern und eine Elektrolytlösung, die in dem abgedichteten Raum aufgenommen sind,
wobei der Metallring der Dichtungsanordnung mit der Ummantelung verbunden ist und die Kernsäule der Dichtungsanordnung mit dem Polkern verbunden ist.

## Revendications

1. Ensemble d'étanchéité d'une batterie, comportant :
une bague en céramique ayant un trou de réception ;
une bague en métal montée sur la bague en céramique pour rendre étanche une extrémité ouverte de la batterie ; et une colonne de noyau disposée dans le trou de réception et comportant un composite de métal-céramique.

2. Ensemble d'étanchéité d'une batterie selon la revendication 1, dans lequel le composite de métal-céramique comporte :
un corps poreux en céramique ; et
un métal versé dans les pores du corps poreux en céramique, dans lequel le composite de métal-céramique et la bague en céramique sont formés dans une structure composite en céramique.

3. Ensemble d'étanchéité d'une batterie selon la revendication 2, dans lequel la colonne de noyau comporte en outre :
une partie en métal disposée sur une extrémité supérieure et/ou une extrémité inférieure de celle-ci.

4. Ensemble d'étanchéité d'une batterie selon la revendication 3, dans lequel l'ensemble d'étanchéité est utilisé pour un pôle positif de la batterie, et le matériau métallique et la partie en métal sont tous deux faits d'un alliage de magnésium-aluminium.

5. Ensemble d'étanchéité d'une batterie selon la revendication 3, dans lequel l'ensemble d'étanchéité est utilisé pour un pôle négatif de la batterie, et le matériau métallique et la partie en métal sont tous deux faits d'un mélange de cuivre et d'oxyde de cuivre.

6. Ensemble d'étanchéité d'une batterie selon la revendication 1, dans lequel la bague en céramique est choisie parmi un élément quelconque d'un groupe constitué de : une bague en céramique d'alumine, une bague en céramique de zircone, une bague en céramique de nitrure d'aluminium, une bague en céramique de nitrure de bore, une bague en céramique de nitrure de silicium et une bague en céramique d'alumine et de zircone, et la bague en métal est choisie parmi un élément quelconque d'un groupe constitué de : une bague en aluminium et une bague en alliage d'aluminium, et la bague en métal a un trou de montage dans celle-ci.

7. Procédé pour fabriquer un ensemble d'étanchéité d'une batterie, comportant les étapes consistant à :
fournir une bague en céramique ayant un trou de réception ; verser une céramique dans le trou de réception de la bague en céramique, et fritter la céramique pour obtenir un corps poreux en céramique ;
verser un métal dans le trou de réception de la bague en céramique au-dessus et/ou sous le corps poreux en céramique frittée, traiter le métal à une température supérieure à un point de fusion du métal pour permettre au métal fondu de s'infiltrer dans le corps poreux en céramique, et obtenir un composite de métal-céramique après refroidissement ; et souder une bague en métal sur la bague en céramique de manière à monter la bague en métal sur la bague en céramique.

8. Procédé selon la revendication 7, dans lequel à l'étape de versement, le corps poreux en céramique et une portion du métal fondu infiltré dans le corps poreux en céramique forment le composite de métal-céramique après refroidissement, alors que la portion restante du métal fondu non infiltré dans le corps poreux en céramique forme une partie en métal après refroidissement.

9. Procédé selon la revendication 7, dans lequel le frittage est réalisé en frittant simultanément la bague en céramique et la céramique versée dans la bague en céramique pour former une structure composite en céramique.

10. Procédé selon la revendication 7 ou 9, dans lequel le frittage est réalisé à une température de frittage 1650 ± 50 °C pendant une durée de frittage de 2 ± 1 heures.

11. Procédé selon la revendication 7, dans lequel la céramique comporte une poudre de céramique versée dans le trou de réception de la bague en céramique directement ou sous la forme d'une pâte.

12. Procédé selon la revendication 7, dans lequel à l'étape de soudage, la bague en métal est montée sur la bague en céramique par brasage, et le brasage est réalisé sous une température de brasage de 570 °C à 660 °C pendant 5 minutes à 30 minutes sous une atmosphère de vide ou un gaz inerte en utilisant un alliage d'aluminium-silicium en tant que matériau de brasage, dans l'alliage d'aluminium- silicium, la teneur en silicium étant dans une plage de 0 à 12 % en poids et le reste étant de l'aluminium.

13. Procédé selon la revendication 7, dans lequel l'ensemble d'étanchéité est utilisé pour un pôle positif de la batterie, et le métal et la partie en métal sont tous deux faits d'un alliage de magnésium-aluminium.

14. Procédé selon la revendication 7, dans lequel l'ensemble d'étanchéité est utilisé pour un pôle négatif de la batterie, et le métal et la partie en métal sont faits d'un mélange de cuivre et d'un oxyde de cuivre.

15. Batterie au lithium-ion, comportant :
une enveloppe ayant au moins une extrémité ouverte ;
un ensemble d'étanchéité selon l'une quelconque des revendications 1 à 6 pour rendre étanche l'extrémité ouverte afin de former un espace étanche avec l'enveloppe ; et
un noyau polaire et une solution d'électrolyte reçue dans l'espace étanche, et
dans lequel la bague en métal de l'ensemble d'étanchéité est reliée à l'enveloppe, et la colonne de noyau de l'ensemble d'étanchéité est reliée au noyau polaire.
